(19) Europäisches Patentamt
European Patent Office
Office européen des brevets

(11) EP 4 130 160 A1

(12) # EUROPEAN PATENT APPLICATION
published in accordance with Art. 153(4) EPC

(43) Date of publication:
**08.02.2023 Bulletin 2023/06**

(21) Application number: **21776956.1**

(22) Date of filing: **19.03.2021**

(51) International Patent Classification (IPC):
***C08L 101/00*** *(1974.07)* ***C08L 93/04*** *(1974.07)*
***F16F 15/02*** *(1968.09)* ***F16F 15/08*** *(1968.09)*

(52) Cooperative Patent Classification (CPC):
**C08L 93/04; C08L 101/00; F16F 15/02; F16F 15/08**

(86) International application number:
**PCT/JP2021/011370**

(87) International publication number:
**WO 2021/193430 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020 JP 2020057148**

(71) Applicant: **Harima Chemicals, Incorporated**
**Kakogawa-shi, Hyogo 675-0019 (JP)**

(72) Inventors:
- **MATSUYOSHI, Katsuya**
**Kakogawa-shi, Hyogo 675-0019 (JP)**
- **DOI, Shoko**
**Kakogawa-shi, Hyogo 675-0019 (JP)**

(74) Representative: **SSM Sandmair Patentanwälte Rechtsanwalt Partnerschaft mbB**
**Joseph-Wild-Straße 20**
**81829 München (DE)**

(54) **ADDITIVE FOR DAMPING POLYMER**

(57) An additive for a damping polymer includes a reaction product of rosins (A) and an oxyalkylene compound (B) capable of reacting with the rosins (A), in which the number of oxyalkylene units per molecule of the reaction product is 2 or more.

EP 4 130 160 A1

## Description

### TECHNICAL FIELD

The present invention relates to an additive for a damping polymer, and more particularly, to an additive for a damping polymer, to be added to a damping composition including a damping polymer.

### BACKGROUND ART

Conventionally, in various industrial fields, it has been demanded to improve vibration resistance (earthquake resistance, base isolation property, vibration-proof property, and vibration control property) by damping various kinds of vibration energy (e.g., vibration energy by machine drive or the like, vibration energy generated by earthquake, etc.). Then, in various industrial fields, damping polymer compositions having performance of damping vibration energy (damping performance), and molded articles thereof (viscoelastic damper) have been used.
Examples of the damping polymer composition include a composition containing a rubber component and an additive for damping vibration energy, and more specifically, it has been proposed a high damping rubber composition that contains a rubber containing natural rubber and/or isoprene rubber, and a rosin-modified phenol and/or a rosin ester (ref: Patent Document 1).

### Citation List

### Patent Document

Patent Document 1: Japanese Unexamined Patent Publication No. 2003-003014

### SUMMARY OF THE INVENTION

### PROBLEM TO BE SOLVED BY THE INVENTION

Meanwhile, damping polymer compositions and molded articles thereof are required to further improve damping properties.
The present invention is an additive for a damping polymer capable of further improving damping properties of damping polymer compositions and molded articles thereof.

### MEANS FOR SOLVING THE PROBLEM

The present invention [1] includes an additive for a damping polymer, including a reaction product of rosins (A); and an oxyalkylene compound (B) capable of reacting with the rosins (A), in which the number of oxyalkylene units per molecule of the reaction product is 2 or more.
The present invention [2] includes the additive for a damping polymer described in [1], in which the number of cyclic diterpene structures derived from the rosins (A), per molecule of the reaction product, is 2 or more and 6 or less.

### EFFECTS OF THE INVENTION

The additive for a damping polymer according to the present invention includes a reaction product of rosins (A) and an oxyalkylene compound (B) capable of reacting with the rosins (A), and the number of oxyalkylene units per molecule of the reaction product thereof is 2 or more, so that particularly excellent damping properties can be achieved.

### BRIEF DESCRIPTION OF THE DRAWINGS

FIG. 1 is an exploded perspective view of a test body used for evaluation of damping performance, as a model of a viscoelastic body.
FIGS. 2A and 2B are schematic explanatory views of a testing machine for displacing the test body shown in FIG. 1 to determine a relationship between a displacement amount and a load: FIG. 2A shows a state before displacement of the test body; and FIG. 2B shows a state after displacement of the test body.
FIG. 3 is a graph showing one example of a hysteresis loop showing the relationship between the displacement

amount and the load obtained by the testing machine shown in FIG. 2.

DESCRIPTION OF THE EMBODIMENTS

An additive for a damping polymer of the present invention is a compound having an oxyalkylene unit and a cyclic diterpene structure derived from rosins (A) in combination.

The additive for a damping polymer is obtained by allowing rosins (A) and an oxyalkylene compound (B) capable of reacting with the rosins (A) to react, as a reaction product thereof.

The rosins (A) are compositions derived from trees, and contain resin acids (compounds having carboxy groups derived from trees) and/or modified products thereof.

Examples of the resin acid include resin acids having a cyclic diterpene structure. Examples of the resin acid having a cyclic diterpene structure include resin acids having conjugated double bonds and a cyclic diterpene structure in combination (e.g., abietic acid, neoabietic acid, palustric acid, etc.), and resin acids having a non-conjugated double bond and a cyclic diterpene structure in combination (e.g., pimaric acid, isopimaric acid, etc.). These resin acids can be used alone or in combination of two or more.

As the resin acid, preferably, a resin acid having conjugated double bonds and a cyclic diterpene structure in combination is used, more preferably, an abietic acid, a neoabietic acid, and a palustric acid are used.

The abietic acid, neoabietic acid, and palustric acid are represented by, for example, the following formulas (1), (2), and (3), respectively.

[Chem. 1]

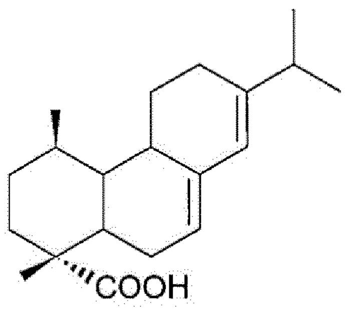
(1)

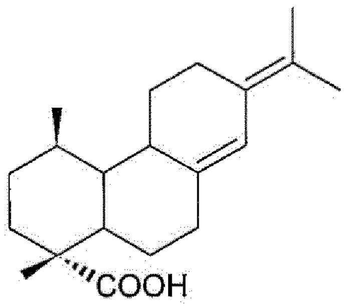
(2)

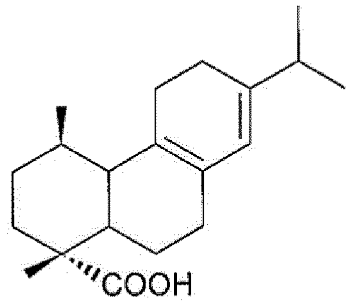
(3)

Examples of the modified product of the resin acid include acid modified products in which the above-described resin acids are modified with α,β-unsaturated carboxylic acids, disproportionated products in which the above-described resin acids are subjected to disproportionation treatment, hydrogenated products in which the above-described resin acids are subjected to hydrogenation treatment, and polymers in which the above-described resin acids are polymerized. These modified products of the resin acids can be used alone or in combination of two or more.

These resin acids and/or modified products thereof are contained in the rosins (A). In other words, the rosins (A) preferably contain cyclic diterpene structures derived from the resin acids and/or modified products thereof.

More specifically, examples of the rosins (A) include unmodified rosins (non-modified rosins) and modified rosins (derivatives).

The unmodified rosin contains any of the above-described resin acids (unmodified products), and examples thereof include tall oil rosin, gum rosin, and wood rosin. These unmodified rosins can be used alone or in combination of two or more. As the unmodified rosin, preferably, tall oil rosin is used.

The modified rosins are modified products of at least one of the above-described unmodified rosins, and contain at least one of the modified products of the above-described resin acids. Examples of the modified rosins include acid-modified rosins in which the unmodified rosins are modified with α,β-unsaturated carboxylic acids, disproportionated rosins in which the unmodified rosins are subjected to disproportionation treatment, hydrogenated rosins in which the unmodified rosins are subjected to hydrogenation treatment, and polymer rosins in which the unmodified rosins are polymerized. These modified rosins can be used alone or in combination of two or more. As the modified rosin, preferably, acid-modified rosin, disproportionated rosin, and hydrogenated rosin are used, more preferably, acid-modified rosin is used.

These rosins (A) can be used alone or in combination of two or more.

As the rosins (A), in view of low cost and environmental friendliness, preferably, rosins except polymerized rosin are used, more preferably, unmodified rosin, acid-modified rosin, disproportionated rosin, and hydrogenated rosin are used, and in view of reactivity, more preferably, unmodified rosin is used.

Examples of the oxyalkylene compound (B) capable of reacting with the rosins (A) include a compound having a reactive group capable of reacting with the rosins (A), and an oxyalkylene group in combination (hereinafter, referred to as a reactive oxyalkylene compound (b 1)).

Examples of the reactive group capable of reacting with the rosins (A) include a hydroxyl group capable of esterification reaction with a carboxy group of a resin acid and/or a modified product thereof, and a (meth)acryl group capable of Diels-Alder reaction with conjugated double bonds of a resin acid and/or a modified product thereof.

(Meth)acryl refers to acryl and/or methacryl.

These reactive groups can be used alone or in combination of two or more.

Examples of the oxyalkylene group include oxyalkylene groups having 2 to 4 carbon atoms, such as oxyethylene group, oxypropylene group (oxy-1,2-propylene group), oxytrimethylene group (oxy-1,3-propylene group), and oxybutylene group. These can be used alone or in combination of two or more. As the oxyalkylene group, preferably, an oxyalkylene group having 2 to 3 carbon atoms is used, more preferably, an oxyethylene group and an oxypropylene group are used, even more preferably, an oxyethylene group is used.

More specifically, examples of the reactive oxyalkylene compound (b1) include a compound having a hydroxyl group and an oxyalkylene group in combination (hereinafter, referred to as a hydroxyl group-containing oxyalkylene compound (b1-1)), and a compound having a (meth)acryl group and an oxyalkylene group in combination (hereinafter referred to as a (meth)acryl group-containing oxyalkylene compound (b1-2)).

Examples of the hydroxyl group-containing oxyalkylene compound (b1-1) include ethylene glycol monoalkyl ethers such as ethylene glycol monomethyl ether, ethylene glycol monoethyl ether, and ethylene glycol monobutyl ether; diethylene glycol monoalkyl ethers such as diethylene glycol monomethyl ether, diethylene glycol monoethyl ether, and diethylene glycol monobutyl ether; oxyalkylene-containing ether monools such as polyoxyethylene monoalkyl ether (number of oxyethylene units: 3 to 30); oxyalkylene-containing diols (number of oxyalkylene units: 2 to 30) such as diethylene glycol, triethylene glycol, other polyoxyethylene glycols (number of oxyethylene units: 4 to 30), dipropylene glycol, tripropylene glycol, other polyoxypropylene glycols (number of oxypropylene units: 4 to 30), and polyoxyethylene-polyoxypropylene (random/block) copolymer diol; oxyalkylene-containing triols (number of oxyalkylene units: 2 to 30) such as polyoxyethylene triol (number of oxyethylene units: 2 to 30), polyoxypropylene triol (number of oxypropylene units: 2 to 30), and polyoxyethylene-polyoxypropylene (random/block) copolymer triol; and oxyalkylene-containing tetraols (number of oxyalkylene units: 2 to 30) such as polyoxyethylene tetraol (number of oxyethylene units: 2 to 30), polyoxypropylene tetraol (number of oxypropylene units: 2 to 30), and polyoxyethylene-polyoxypropylene (random/block) copolymer tetraol. These can be used alone or in combination of two or more.

The number of hydroxyl groups per molecule of the hydroxyl group-containing oxyalkylene compound (b 1-1) is, for example, 1 or more, preferably 2 or more, and for example, 6 or less, preferably 4 or less, more preferably 3 or less.

That is, as the hydroxyl group-containing oxyalkylene compound (b1-1), preferably, an oxyalkylene-containing diol, an oxyalkylene-containing triol, and an oxyalkylene-containing tetraol are used, more preferably, an oxyalkylene-containing diol and an oxyalkylene-containing triol are used, even more preferably, an oxyalkylene-containing diol is used, particularly preferably, polyoxyethylene glycol is used.

The number of oxyalkylene groups per molecule of the hydroxyl group-containing oxyalkylene compound (b1-1) is, for example, 1 ormore, preferably 2 or more, more preferably 4 or more, and for example, 30 or less, preferably 10 or less, more preferably 8 or less.

The number average molecular weight of the hydroxyl group-containing oxyalkylene compound (b1-1) is appropriately set in accordance with its purpose and use.

Examples of the (meth)acryl group-containing oxyalkylene compound (b 1-2) include oxyethylene-containing mono(meth)acrylates such as methoxy-diethylene glycol (meth)acrylate, methoxy-triethylene glycol (meth)acrylate, other methoxy-polyoxyethylene glycol (meth)acrylates (number of oxyethylene units: 4 to 30); ethoxy diethylene glycol (meth)acrylate, ethoxy triethylene glycol (meth)acrylate, other ethoxy polyoxyethylene glycol (meth)acrylates (number of oxyethylene units: 4 to 30); phenoxydiethylene glycol acrylate, phenoxytriethylene glycol acrylate, and other phenoxypolyoxyethylene glycol (meth)acrylates (number of oxyethylene units: 4 to 30); and oxyethylene-containing di(meth)acrylates such as ethylene glycol di(meth)acrylate, diethylene glycol di(meth)acrylate, triethylene glycol di(meth)acrylate, and other polyoxyethylene glycol di(meth)acrylates (number of oxyethylene units: 4 to 30). These can be used alone or in combination of two or more.

The number of (meth)acryl groups per molecule of the (meth)acryl group-containing oxyalkylene compound (b1-2) is, for example, 1 or more, and for example, 6 or less, preferably 4 or less, more preferably 2 or less, particularly preferably 1.

That is, as the (meth)acryl group-containing oxyalkylene compound (b1-2), preferably, an oxyethylene-containing mono(meth)acrylate is used, more preferably, methoxy-polyoxyethylene glycol (meth)acrylate (number of oxyethylene units: 4 to 30) is used.

The number of oxyalkylene groups per molecule of the (meth)acryl group-containing oxyalkylene compound (b1-2) is, for example, 1 or more, preferably 2 or more, more preferably 4 or more, and for example, 30 or less, preferably 10 or less.

The number average molecular weight of the (meth)acryl group-containing oxyalkylene compound (b1-2) is appropriately set in accordance with its purpose and use.

These reactive oxyalkylene compounds (b1) can be used alone or in combination of two or more.

Examples of the oxyalkylene compound (B) capable of reacting with the rosins (A) also include alkylene oxide (b2), in addition to the above-described reactive oxyalkylene compounds (b1).

The alkylene oxide (b2) is a cyclic ether capable of addition polymerizing with the rosins (A) and is not particularly limited. Examples thereof include alkylene oxides having 2 to 4 carbon atoms, such as ethylene oxide, propylene oxide (1,2-propylene oxide), trimethylene oxide (1,3-propylene oxide), and 1,4-butylene oxide.

These alkylene oxides (b2) can be used alone or in combination of two or more.

As the alkylene oxide (b2), preferably, an alkylene oxide having 2 to 3 carbon atoms is used, more preferably, ethylene oxide and 1,2-propylene oxide are used, even more preferably, ethylene oxide is used.

These oxyalkylene compounds (B) can be used alone or in combination of two or more.

The oxyalkylene compound (B) reacts with the rosins (A) in the following manner.

For example, when the oxyalkylene compound (B) contains the hydroxyl group-containing oxyalkylene compound (b1-1), for example, the carboxy group of the resin acid and/or the modified product thereof in the rosins (A) and the hydroxyl group of the hydroxyl group-containing oxyalkylene compound (b1-1) are subjected to esterification reaction in the presence of an esterification catalyst to be added as needed. For example, when the rosins (A) is acid-modified and the carboxy group is added to the resin acid, the carboxy group thus added and the hydroxyl group of the hydroxyl group-containing oxyalkylene compound (b1-1) can also be subjected to esterification reaction in the presence of an esterification catalyst to be added as needed.

In these cases, as the mixing ratio of the rosins (A) to the hydroxyl group-containing oxyalkylene compound (b1-1), the number of moles of hydroxy groups in the hydroxyl group-containing oxyalkylene compound (b1-1), per mole of the carboxy group of the resin acid and/or the modified product thereof in the rosins (A) is, for example, 0.8 moles or more, preferably 0.9 moles or more, more preferably 0.95 moles or more, and for example, 5.0 moles or less, preferably 3.0 moles or less.

As the reaction conditions (esterification reaction conditions) for the rosins (A) and the hydroxyl group-containing oxyalkylene compound (b1-1), under an inert gas atmosphere and an atmospheric pressure, the reaction temperature is, for example, 100°C or more, preferably 150°C or more, and for example, 400°C or less, preferably 300°C or less. The reaction time is, for example, 2 hours or more, preferably 4 hours or more, and for example, 48 hours or less, preferably 24 hours or less.

In this manner, as the reaction product of the rosins (A) and the hydroxyl group-containing oxyalkylene compound (b1-1), a compound (B) containing a cyclic diterpene structure derived from the resin acid and/or the modified product thereof in the rosins (A), and an oxyalkylene group derived from the hydroxyl group-containing oxyalkylene compound (b1-1) can be obtained.

When the oxyalkylene compound (B) contains the (meth)acryl group-containing oxyalkylene compound (b1-2), for example, the conjugated double bonds of the resin acid and/or the modified product thereof in the rosins (A) and the (meth)acryl group in the (meth)acryl group-containing oxyalkylene compound (b1-2) are subjected to Diels-Alder reaction in the presence of a catalyst to be added as needed.

In this case, as the mixing ratio of the rosins (A) to the (meth)acryl group-containing oxyalkylene compound (b1-2), the number of moles of the (meth)acryl group in the (meth)acryl group-containing oxyalkylene compound (b1-2), per unit of the conjugated double bonds of the resin acid and/or the modified product thereof in the rosins (A) is, for example, 0.2 moles or more, preferably 0.4 moles or more, more preferably 0.7 moles or more, even more preferably 0.9 moles or more, and for example, 5.0 moles or less, preferably 3.0 moles or less, more preferably 1.0 mole or less.

As the reaction conditions (Diels-Alder reaction conditions) for the rosins (A) and the (meth)acryl group-containing oxyalkylene compound (b1-2), under an inert gas atmosphere and an atmospheric pressure, the reaction temperature is, for example, 100°C or more, preferably 150°C or more, and for example, 400°C or less, preferably 300°C or less. The reaction time is, for example, 2 hours or more, preferably 4 hours or more, and for example, 48 hours or less, preferably 24 hours or less.

In this manner, as the reaction product of the rosins (A) and the (meth)acryl group-containing oxyalkylene compound (b1-2), a compound (B) containing a cyclic diterpene structures derived from the resin acid and/or the modified product thereof in the rosins (A), and an oxyalkylene group derived from the (meth)acryl group-containing oxyalkylene compound (b1-2) can be obtained.

Further, when the oxyalkylene compound (B) contains the alkylene oxide (b2), the alkylene oxide (b2) can be subjected to ring opening polymerization with the carboxy group of the resin acid and/or the modified product thereof in the rosins (A) in the presence of a known polymerization catalyst.

If necessary, a known dihydric alcohol (e.g., ethylene glycol, propylene glycol, etc.) is subjected to esterification reaction with the carboxy group of the resin acid and/or the modified product thereof in the rosins (A), and then, the alkylene oxide (b2) can be subjected to addition polymerization with a terminal hydroxyl group thereof.

In this case, as the mixing ratio of the rosins (A) to the alkylene oxide (b2), the alkylene oxide (b2) per mole of the carboxy group in the rosins (A) is, for example, 1 mole or more, preferably 2 moles or more, and for example, 40 moles or less, preferably 30 moles or less.

As the reaction conditions (addition polymerization conditions) for the rosins (A) and the alkylene oxide (b2), under an inert gas atmosphere and an atmospheric pressure, the reaction temperature is, for example, 100°C or more, preferably 150°C or more, and for example, 400°C or less, preferably 300°C or less. The reaction time is, for example, 2 hours or more, preferably 4 hours or more, and for example, 48 hours or less, preferably 24 hours or less.

In this manner, as the reaction product of the rosins (A) and the alkylene oxide (b2), a compound containing a cyclic diterpene structures derived from the resin acid and/or the modified product thereof in the rosins (A), and an oxyalkylene group derived from the alkylene oxide (b2) can be obtained.

These reactions (esterification reaction, Diels-Alder reaction, and addition polymerization reaction) can be used alone or in combination of two or more.

That is, the rosins (A) and the oxyalkylene compound (B) may be allowed to react by any one of the reaction methods, or by two or more reaction methods. When two or more reaction methods are used in combination, the reaction sequence is not particularly limited and can be appropriately set.

For example, when esterification reaction and Diels-Alder reaction are used in combination, first, the rosins (A) and the oxyalkylene compound (B) may be subjected to esterification reaction, followed by Diels-Alder reaction; the rosins (A) and the oxyalkylene compound (B) may be subjected to Diels-Alder reaction, followed by esterification reaction; or the rosins (A) and the oxyalkylene compound (B) may be subjected to esterification reaction and Diels-Alder reaction simultaneously. The same applies to addition polymerization reaction, and esterification reaction or Diels-Alder reaction, and addition polymerization reaction can be used in combination, or, esterification reaction, Diels-Alder reaction, and addition polymerization reaction can be used in combination.

As the oxyalkylene compound (B), preferably, the reactive oxyalkylene compound (b1) is used, more preferably, the hydroxyl group-containing oxyalkylene compound (b 1-1) is used. In other words, as the reaction of the rosins (A) and the oxyalkylene compound (B), preferably, esterification reaction is used.

In the above-described reactions of the rosins (A) and the oxyalkylene compound (B), if necessary, a part or all of the carboxy groups of the rosins (A) can also be blocked (deactivated) by alcohol (C) not containing an oxyalkylene group.

The alcohol (C) is not particularly limited as long as it is a compound not containing an oxyalkylene group but having one or more hydroxyl groups, and examples thereof include monovalent aliphatic alcohols such as methanol, ethanol, and propanol; divalent aliphatic alcohols such as ethylene glycol, diethylene glycol, propylene glycol, neopentyl glycol, 1,6-hexanediol, and 1,8-octanediol; trivalent aliphatic alcohols such as glycerine, trimethylolethane, and trimethylolpropane; tetravalent aliphatic alcohols such as pentaerythritol and diglycerine; and hexavalent aliphatic alcohols such as dipentaerythritol.

These alcohols (C) can be used alone or in combination of two or more.

The timing of adding the alcohol (C) is not particularly limited and is appropriately set in accordance with its purpose and use. For example, before the rosins (A) and the oxyalkylene compound (B) are allowed to react, a part or all of the carboxy groups of the rosins (A) can be blocked by being subjected to esterification reaction with the alcohol (C). For example, when the rosins (A) and the oxyalkylene compound (B) are allowed to react and then, the resulting reaction product has a free carboxy group, a part or all of its carboxy group can be blocked by being subjected to esterification reaction with the alcohol (C). Further, for example, upon reaction of the rosins (A) and the oxyalkylene compound (B), the alcohol (C) is added thereto, and a part or all of the carboxy groups of the rosins (A) are subjected to esterification reaction with the alcohol (C), so that the carboxy group can be blocked.

When the carboxy groups are blocked with the alcohol (C), the ratio of the alcohol (C) to the carboxy group and the reaction conditions are appropriately set in accordance with its purpose and use.

When the carboxy groups are blocked with the alcohol (C), preferably, the conjugated double bonds of the rosins (A) and the (meth)acryl group-containing oxyalkylene compound (b1-2) are allowed to react, and thereafter, unreacted carboxy groups derived from the rosins (A) are blocked with the alcohol (C) and deactivated.

In this manner, as the reaction product of the rosins (A) and the oxyalkylene compound (B) (and the alcohol (C) as needed), the additive for a damping polymer is obtained.

The additive for a damping polymer (that is, the reaction product obtained by the reaction of the rosins (A) and the oxyalkylene compound (B)) has the cyclic diterpene structure derived from the resin acid and/or the modified product

thereof in the rosins (A) and the oxyalkylene unit derived from the oxyalkylene compound (B) in combination.

The number of cyclic diterpene structures in one molecule of the additive for a damping polymer (that is, the number of moles of the resin acid per mole of the reaction product) is, for example, 1 or more, preferably 2 or more, and for example, 10 or less, preferably 8 or less, more preferably 6 or less, even more preferably 4 or less, particularly preferably 2.

When the number of cyclic diterpene structures is within the above range, particularly excellent damping properties can be achieved.

The number of oxyalkylene units (groups) in one molecule of the additive for a damping polymer (that is, the number of moles of the oxyalkylene unit per mole of the reaction product) is 2 or more, preferably 3 or more, more preferably 4 or more, even more preferably, 6 or more, particularly preferably, 8 or more, and for example, 40 or less, preferably 30 or less.

When the number of oxyalkylene units is within the above range, excellent damping properties can be achieved.

The additive for a damping polymer has a weight average molecular weight (a molecular weight in terms of standard polystyrene by GPC measurement) of, for example, 500 or more, preferably 800 or more, and for example, 2500 or less, preferably 2000 or less.

The additive for a damping polymer thus obtained contains the reaction product of the rosins (A) and the oxyalkylene compound (B) capable of reacting with the rosins (A), and the number of oxyalkylene units per molecule of the reaction product thereof is 2 or more, so that particularly excellent damping properties can be achieved.

Therefore, the additive for a damping polymer is suitably used in damping polymer compositions and molded articles thereof in various industrial fields.

A damping polymer composition contains, for example, a base polymer and the above-described additive for a damping polymer.

Examples of the base polymer include crosslinkable rubbers and non-crosslinkable thermoplastic elastomers. These base polymers can be used alone or in combination of two or more. As the base polymer, preferably, a crosslinkable rubber is used.

The crosslinkable rubber is a rubber that is in a solid state at room temperature before crosslinking, and examples thereof include natural rubber, isoprene rubber (IR), butadiene rubber (BR), and styrene-butadiene rubber (SBR).

Examples of the natural rubber include known natural rubber such as various grades (CV60, etc.) of Standard Malaysian Rubber (SMR), and deproteinized natural rubber.

Isoprene rubber (IR) is a crosslinkable polymer having a polyisoprene structure in the molecule, and a known isoprene rubber (IR) is used.

Butadiene rubber (BR) is a crosslinkable polymer having a polybutadiene structure in the molecule, and a known butadiene rubber (BR) is used. In view of rubber properties, preferably, a butadiene rubber (BR) having a cis-1,4 bond content of 95% or more is used. The butadiene rubber (BR) may be either oil extended or non-oil extended.

The styrene-butadiene rubber (SBR) is obtained by copolymerizing styrene and 1,3-butadiene by a known method. As the styrene-butadiene rubber (SBR), at least one of high styrene SBR, medium styrene SBR, and low styrene SBR may be used. The styrene-butadiene rubber (SBR) may also be either oil extended or non-oil extended.

These crosslinkable rubbers can be used alone or in combination of two or more.

As the crosslinkable rubber, in view of damping properties, low cost, and ready availability, preferably, a natural rubber is used.

When the cross linkable rubber has a glass transition temperature, the glass transition temperature thereof is preferably, for example, other than near room temperatures (2°C to 35°C). Therefore, at near room temperature that is in a general use temperature range for the damping polymer composition and molded articles thereof, the temperature dependency of the damping performance can be reduced, so that stable damping performance can be achieved over a wide range of temperatures.

The content ratio of the base polymer with respect to the total amount of the damping polymer composition is appropriately set in accordance with its purpose and use.

The content ratio of the additive for a damping polymer with respect to 100 parts by mass of the base polymer is, for example, 10 parts by mass or more, and for example, 45 parts by mass or less.

The damping polymer composition can contain an additive such as silica, silane compounds, and crosslinking components (crosslinking agent, crosslinking accelerator), if necessary.

Silica is an additive for improving damping performance of a viscoelastic body by being dispersed in the base polymer. Examples of silica include wet-process silica and dry-process silica. Silica is also available as commercially available products. These silicas can be used alone or in combination of two or more.

The ratio of silica with respect to 100 parts by mass of the base polymer is, for example, 110 parts by mass or more in view of damping properties, and for example, 170 parts by mass or less in view of processability of the damping polymer composition.

Examples of the silane compound include silylating agents and silane coupling agents. The silane compound

reacts with silica and modifies a surface of the silica, to improve affinity and dispersibility to the base polymer of the silica.

Examples of the silane compound include an alkoxysilane compound of the following formula (a):

$$R^1_nSi(OR^2)_{4-n} \qquad (a)$$

wherein R1 is a phenyl group or an alkyl group having 1 to 10 carbon atoms, and R2 is an alkyl group having 1 to 3 carbon atoms; and n is a number of 1 to 3.

Examples of the alkoxysilane compound include methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, and decyltrimethoxysilane.

These can be used alone or in combination of two or more.

In view of damping properties, preferably, phenyltrimethoxysilane and phenyltriethoxysilane are used.

The content ratio of the silane compound with respect to 100 parts by mass of the base polymer is, for example, 10 parts by mass or more, preferably 15 parts by mass or more in view of dispersibility of silica, and for example, 40 parts by mass or less in view of processability of the damping polymer composition.

The crosslinking component is, for example, an additive to be added when the base polymer contains a crosslinkable rubber, and examples thereof include a crosslinking agent and a crosslinking accelerator.

Examples of the crosslinking agent include sulfur crosslinking agents, and more specifically, examples thereof include sulfur such as sulfur powder, oil-treated sulfur powder, precipitated sulfur, colloidal sulfur, and dispersible sulfur; and organic containing sulfur compounds such as tetramethylthiuram disulfide and N,N-dithiobis morpholine. These can be used alone or in combination of two or more.

As the crosslinking agent, preferably, sulfur is used.

The content ratio of the crosslinking agent with respect to 100 parts by mass of the crosslinkable rubber is, for example, 0.5 parts by mass or more, and for example, 3 parts by mass or less. When, for example, oil-treated sulfur powder, dispersible sulfur, or the like is used as the crosslinking agent, at least one of the above-described content ratios of the crosslinking agent is expressed in terms of sulfur.

Examples of the crosslinking accelerator include sulfenamide accelerators and thiuram accelerators. These crosslinking accelerators can be used alone or in combination of two or more, and preferably used in combination of two or more.

Examples of the sulfenamide accelerator include N-cyclohexyl-2-benzothiazolyl sulfenamide, N,N-dicyclohexyl-2-benzothiazolyl sulfenamide, N-oxydiethylene-2-benzothiazolyl sulfenamide, and N-tert-butyl-2-benzothiazolyl sulfenamide. These can be used alone or in combination of two or more.

The content ratio of the sulfenamide accelerator with respect to 100 parts by mass of the crosslinkable rubber is, for example, 0.5 parts by mass or more, and for example, 3 parts by mass or less.

Examples of the thiuram accelerator include tetramethylthiuram disulfide, tetraethylthiuram disulfide, tetrabutylthiuram disulfide, tetramethylthiuram monosulfide, tetrakis(2-ethylhexyl)thiuram disulfide, and dipentamethylenethiuram tetrasulfide. These can be used alone or in combination of two or more.

The content ratio of the thiuram accelerator with respect to 100 parts by mass of the crosslinkable rubber is, for example, 0.5 parts by mass or more, and for example, 3 parts by mass or less.

Further, other additives such as inorganic fillers (except silica), crosslinking aids (except crosslinking agents and crosslinking accelerators), softening agents, tackifiers (except the above-described additive for a damping polymer), and antioxidants can be added to the damping polymer composition at appropriate levels.

Examples of the inorganic filler (except silica) include known inorganic fillers such as carbon black and calcium carbonate. These can be used alone or in combination of two or more.

The content ratio of the inorganic filler with respect to 100 parts by mass of the base polymer is, for example, 1 part by mass or more, and for example, 5 parts by mass or less.

Examples of the crosslinking aid (except crosslinking agents and crosslinking accelerators) include known crosslinking aids including metal compounds such as zinc oxide, and fatty acids such as stearic acid, oleic acid, and cottonseed fatty acid. These can be used alone or in combination of two or more.

As the crosslinking aid, preferably, a metal compound and fatty acid are used in combination, more preferably, zinc oxide and stearic acid are used in combination.

The content ratio of the metal compound with respect to 100 parts by mass of the base polymer is, for example, 1 part by mass or more, and for example, 5 parts by mass or less.

The content ratio of the fatty acid with respect to 100 parts by mass of the base polymer is, for example, 1 part by mass or more, and for example, 3 parts by mass or less.

The softening agent is an additive for improving processability of the damping polymer composition, and for example, a liquid rubber that is in a liquid state at room temperature is used.

Examples of the liquid rubber include liquid polyisoprene rubber, liquid nitrile rubber (liquid NBR), and liquid

styrene-butadiene rubber (liquid SBR). These can be used alone or in combination of two or more.

As the liquid rubber, preferably, a liquid polyisoprene rubber is used.

When the liquid rubber is added, the liquid rubber is subjected to crosslinking reaction together with the above-described crosslinkable rubber, but is distinguished from the above-described "crosslinkable rubber" because it is a component to be added as a softening agent.

The content ratio of the liquid rubber with respect to 100 parts by mass of the base polymer (including the crosslinkable rubber) is, for example, 5 parts by mass or more, and for example, 50 parts by mass or less.

In addition to the above, for example, a coumarone-indene resin is used as the softening agent.

Examples of the coumarone-indene resin used as the softening agent include a coumarone-indene resin containing a polymer of coumarone and indene and having a relatively low molecular weight (e.g., average molecular weight of about 1000 or less). The coumarone-indene resin is also available as a commercially available product.

The content ratio of the coumarone-indene resin with respect to 100 parts by mass of the base polymer (including the crosslinkable rubber) is, for example, 3 parts by mass or more, and for example, 20 parts by mass or less.

Examples of the tackifier (except the above-described additive for a damping polymer) include known petroleum resins, known rosins, and known rosin esters. These can be used alone or in combination of two or more.

The tackifier (except the above-described additive for a damping polymer) is preferably not added to the damping polymer composition.

Examples of the antioxidant include known antioxidants such as benzimidazole antioxidants, quinone antioxidants, polyphenol antioxidants, and amine antioxidants. These can be used alone or in combination of two or more.

As the antioxidant, preferably, a benzimidazole antioxidant and a quinone antioxidant are used, more preferably, these antioxidants are used in combination.

The content ratio of the benzimidazole antioxidant with respect to 100 parts by mass of the base polymer (including the crosslinkable rubber) is, for example, 0.5 parts by mass or more, and for example, 5 parts by mass or less.

The content ratio of the quinone antioxidant with respect to 100 parts by mass of the base polymer (including the crosslinkable rubber) is, for example, 0.5 parts by mass or more, and for example, 5 parts by mass or less.

The damping polymer composition can be obtained by mixing the base polymer and the above-described additive for a damping polymer (in addition, the above-described various additives, if necessary) by a known method.

With the damping polymer composition, a viscoelastic body having excellent base isolation property can be molded. The molded article thus obtained is suitably used as, for example, a viscoelastic support for base isolation assembled in a foundation of a building, a viscoelastic damper for earthquake resistance assembled in a structure of a building, and the like.

The molded article of the damping polymer composition is suitably used as, for example, vibration control members for various cables such as cables for suspension bridges and cables for cable-stayed bridges; vibration-proof members in industrial machines, aircraft, automobiles, railway vehicles, and the like; and vibration-proof members in electronic equipment such as computers, peripheral devices, and electric home appliances.

## EXAMPLES

Next, the present invention is described with reference to Examples and Comparative Examples. The present invention is however not limited by the following Examples. The "parts" and "%" are based on mass unless otherwise specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS".

<Additive for damping polymer>

### Example 1

A 2 L flask was charged with 830 parts of tall rosin (unmodified rosin) as the rosins (A), and the tall rosin was melted by heating to 200°C under flowing nitrogen at 5 ml/min.

Thereafter, while the melted tall rosin was stirred, 170 parts of diethylene glycol as the hydroxyl group-containing oxyalkylene compound (b1-1) was added thereto, and the temperature was then increased to 270°C over 8 to 10 hours to subject the carboxy group of the resin acid in the rosins (A) and the hydroxyl group of the hydroxyl group-containing oxyalkylene compound (b1-1) to esterification reaction.

In this manner, as the reaction product, an additive for a damping polymer having a cyclic diterpene structure derived from the rosins (A) and an oxyethylene unit derived from the hydroxyl group-containing oxyalkylene compound (b1-1) in combination was obtained.

In the above reaction, the number of moles of the hydroxy group in the hydroxyl group-containing oxyalkylene compound (b1-1) per mole of the carboxy group of the resin acid and/or the modified product thereof in the rosins (A) was adjusted to 1.0 mol.

In this manner, 2 moles of the resin acid was added to 1 mole of diethylene glycol (2 moles of hydroxyl group). Thus, two cyclic diterpene structures were contained in one molecule of the resulting reaction product.

Examples 2 to 5

An additive for a damping polymer was obtained by subjecting the carboxy group of the rosins (A) and the hydroxyl group of the hydroxyl group-containing oxyalkylene compound (b1-1) to esterification reaction in the same manner as in Example 1, except that the formulation was changed to that shown in Table 1. The number of cyclic diterpene structures per molecule of the resulting reaction product was calculated.

Example 6

A 2 L flask was charged with 530 parts of tall rosin (unmodified rosin) as the rosins (A), and the tall rosin was melted by heating under flowing nitrogen at 5 ml/min. Thereafter, when the temperature reached 205°C, under stirring the melted tall rosin, a dropping funnel was charged with 240 parts of methoxy-poloxyethylene glycol acrylate (trade name AM-90G, manufactured by Shin-Nakamura Chemical Co., Ltd.) as the (meth)acryl group-containing oxyalkylene compound (b1-2), and the methoxy-poloxyethylene glycol acrylate was then added dropwise over 2 hours to subject the conjugated double bonds of the resin acid in the rosins (A) and the acryl group of the (meth)acryl group-containing oxyalkylene compound (b1-2) to Diels-Alder reaction.

In this manner, as the reaction product, a compound having a cyclic diterpene structure derived from the rosins (A) and an oxyethylene unit derived from the (meth)acryl group-containing oxyalkylene compound (b1-2) in combination was obtained.

Thereafter, 230 parts of 1-octanol as the alcohol (C) was added to the obtained compound, and the temperature was then increased to 270°C over 8 to 10 hours to subject the carboxy group remaining in the compound and the hydroxyl group of the alcohol (C) to esterification reaction, so that the carboxy group was blocked. In this manner, an additive for a damping polymer was obtained.

In the above reaction, the number of moles of the (meth)acryl group in the (meth)acryl group-containing oxyalkylene compound (b1-2), per unit of the conjugated double bond of the resin acid and/or the modified product thereof in the rosins (A), was adjusted to 1.0 mol.

In this manner, 1 mole of the resin acid was added to 1 mole of the methoxy-polyoxyethylene glycol acrylate (1 mole of (meth)acryl group). Thus, one cyclic diterpene structure was contained in one molecule of the resulting reaction product.

Example 7

In the following method, first, the conjugated double bonds of the resin acid in the rosins (A) and the acryl group of the (meth)acryl group-containing oxyalkylene compound (b1-2) were subjected to Diels-Alder reaction, and then, the carboxy group of the resin acid in the rosins (A) and the hydroxyl group of the hydroxyl group-containing oxyalkylene compound (b1-1) were subjected to esterification reaction.

That is, a 2 L flask was charged with 590 parts of tall rosin (unmodified rosin) as the rosins (A), and the tall rosin was melted by heating under flowing nitrogen at 5 ml/min. Thereafter, when the temperature reached 200°C, under stirring the melted tall rosin, a dropping funnel was charged with 260 parts of methoxy-poloxyethylene glycol acrylate (trade name AM-90G, manufactured by Shin-Nakamura Chemical Co., Ltd.) as the (meth)acryl group-containing oxyalkylene compound (b1-2), and the methoxy-poloxyethylene glycol acrylate was then added dropwise over 2 hours to subject the conjugated double bonds of the resin acid in the rosins (A) and the acryl group of the (meth)acryl group-containing oxyalkylene compound (b1-2) to Diels-Alder reaction. Subsequently, the resulting reaction product was cooled to 150°C.

In the above reaction, the number of moles of the (meth)acryl group in the (meth)acryl group-containing oxyalkylene compound (b1-2), per unit of the conjugated double bond of the resin acid and/or the modified product thereof in the rosins (A), was adjusted to 1.0 mol.

Thereafter, the resulting reaction product was melted at 200°C, and as the hydroxyl group-containing oxyalkylene compound (b1-1), 60 parts of diethylene glycol and 90 parts of triethylene glycol were added thereto. The temperature was then increased to 270°C over 8 to 10 hours to subject the carboxy group of the resin acid in the reaction product and the hydroxyl group of the hydroxyl group-containing oxyalkylene compound (b1-1) to esterification reaction.

In the above reaction, the number of moles of the hydroxy group in the hydroxyl group-containing oxyalkylene

compound (b1-1) per mole of the carboxy group of the resin acid and/or the modified product thereof in the rosins (A) was adjusted to 1.0 mol.

In this manner, as the reaction product, a compound having a cyclic diterpene structure derived from the rosins (A) and oxyethylene units derived from the hydroxyl group-containing oxyalkylene compound (b1-1) and the (meth)acryl group-containing oxyalkylene compound (b1-2) in combination was obtained.

The obtained compound was used as an additive for a damping polymer. The number of cyclic diterpene structures per molecule of the resulting reaction product was calculated.

Example 8

An additive for a damping polymer was obtained by subjecting the conjugated double bonds in the rosins (A) and the acryl group of the (meth)acryl group-containing oxyalkylene compound (b1-2) to Diels-Alder reaction, and then subjecting the carboxy group in the reaction product and the hydroxyl group of the hydroxyl group-containing oxyalkylene compound (b1-1) to esterification reaction in the same manner as in Example 7, except that the formulation was changed to that shown in Table 1. The number of cyclic diterpene structures per molecule of the resulting reaction product was calculated.

Comparative Example 1

A 2 L flask was charged with 660 parts of tall rosin (unmodified rosin) as the rosins (A), and the tall rosin was melted by heating to 200°C under flowing nitrogen at 5 ml/min.

Thereafter, while the melted tall rosin was stirred, 340 parts of 1-octanol as the alcohol (C) was added thereto, and the temperature was then increased to 270°C over 8 to 10 hours to subject the carboxy group of the resin acid in the rosins (A) and the hydroxyl group of the alcohol (C) to esterification reaction.

In this manner, as the reaction product, an additive for a damping polymer containing a cyclic diterpene structure derived from the rosins (A) but not containing an oxyalkylene unit was obtained. The number of cyclic diterpene structures per molecule of the resulting reaction product was calculated.

<Evaluation>

(1) Preparation of damping polymer composition

As the base polymer, a natural rubber (SMR-CV60 (Standard Malaysian Rubber, grade CV60), which was a crosslinkable rubber, was used to give a damping polymer composition.

More specifically, while 100 parts by mass of the natural rubber was masticated using a closed type kneader, the following components were mixed therein, and the mixture was kneaded with setting the kneading temperature to 160°C.

Additive for a damping polymer of each Example and Comparative Example: 20 parts by mass
Silica (NipSil VN3, manufactured by Tosoh Silica Corporation) 140 parts by mass
Silane compound (phenyltriethoxysilane KBE-103, manufactured by Shin-Etsu Chemical Co., Ltd.) 30 parts by mass
Liquid polyisoprene rubber (KURARAY LIQUID RUBBER LIR-50, number average molecular weight: 54000, manufactured by Kuraray Co., Ltd.) 30 parts by mass
Carbon black (FEF SEAST 3, manufactured by Tokai Carbon Co., Ltd.) 3 parts by mass
Zinc oxide II (manufactured by Mitsui Mining & Smelting Co., Ltd.) 4 parts by mass
Stearic acid (Tsubaki, manufactured by NOF Corporation) 2 parts by mass

Subsequently, crosslinking components were added to 100 parts by mass of the natural rubber at the following levels and the added mixture was further kneaded.

5% oil treated sulfur powder (crosslinking agent, manufactured by Tsurumi Chemical Industry Co., Ltd.) 1.58 parts by mass (1.5 parts by mass as sulfur)
Sulfenamide accelerator (NOCCELER (registered trademark) NS, N-tert-butyl-2-benzothiazolylsulfenamide, manufactured by Ouchi Shinko Chemical Industry Co., Ltd.) 1 part by mass
Thiuram accelerator (NOCCELER (registered trademark) TBT-n, tetrabutylthiuram disulfide, manufactured by Ouchi Shinko Chemical Industry Co., Ltd.) 1 part by mass

In this manner, a damping polymer composition was obtained as the kneaded mixture.

(2) Production of molded article

The damping polymer composition was molded into a sheetlike shape by extrusion molding, and the molded sheet was punched to form a flat plate 1 (8 mm in thickness × 40 mm in length × 40 mm in width) having a rectangular planar shape as shown in FIG. 1.

Subsequently, a steel plate 2 having a rectangular flat shape of 6 mm in thickness × 44 mm in length × 44 mm in width was superimposed on each of the front and back surfaces of the formed flat plate 1 via a vulcanizing adhesive, so that a laminate was made.

With being pressurized in a laminating direction, the above laminate was heated to 150°C to crosslink the damping polymer composition that formed the flat plate 1, and also, the flat plate 1 was vulcanization-adhered to two steel plates 2 to prepare a test body 3 for evaluation of damping performance, as a model of a viscoelastic body.

(3) Displacement test

As shown in FIG. 2A, two test bodies 3 were prepared, and these two test bodies 3 were each fixed to a center fixing jig 4 via one steel plate 2, and side fixing jigs 5 were also each fixed to the other steel plate 2 of each of the test bodies 3.

Subsequently, the center fixing jig 4 was fixed to a fixing arm 6 on the upper side of a testing machine, which is not shown, via joints 7, and the two side fixing jigs 5 were fixed to a movable board 8 on the lower side of the testing machine via joints 9.

Both of the test bodies 3 were fixed in the above-described manner in a state where two parallel sides of the flat plate 1 were aligned in parallel to the following displacement direction.

Subsequently, with the following operations (I) and (II) as one cycle, a hysteresis loop H (ref: FIG. 3) showing a relationship between a displacement amount (mm) in the thickness direction of the flat plate 1 and a load (N) when the flat plates 1 were repeatedly distorted and deformed, or vibrated, was obtained.

(I): The movable board 8 is displaced so as to be pushed up in a direction toward the fixing arm 6 as indicated by the outlined arrow in FIG. 2A, so that the flat plates 1 are distorted and deformed in a direction orthogonal to the thickness direction as shown in FIG. 2B.

(II): The movable board 8 is then displaced so as to be drawn down in an opposite direction to the fixing arm 6 as indicated by the outlined arrow in FIG. 2B, so that the flat plates 1 are returned from the above-described state to the state shown in FIG. 2A.

The above operations (I) and (II) were performed in three cycles at a temperature of 23°C, and at the third cycle, measurement was made to obtain values.

The maximum displacement amount in each cycle was set so that a deviation amount, in the direction orthogonal to the thickness direction of the flat plate 1, of the two steel plates 2 sandwiching the flat plate 1 was 100% of the thickness of the flat plate 1.

From the hysteresis loop H of FIG. 3 obtained by the measurement, by formula (i):
[Mathematical Formula 1]

$$Geq = \frac{Keq \times T}{A} \qquad (i)$$

an equivalent shear modulus of elasticity Geq ($N/mm^2$) was determined.

In the formula, Keq (N/mm) is an inclination of a line L1 indicated by a thick solid line in FIG. 3, the line L1 connecting the maximum displacement point and the minimum displacement point in the hysteresis loop H; T (mm) is a thickness of the flat plate 1; and A ($mm^2$) is a cross section of the flat plate 1.

From the hysteresis loop H of FIG. 3, by formula (ii):
[Mathematical Formula 2]

$$Heq = \frac{1}{4\pi} \times \frac{\Delta W}{W} \qquad (ii)$$

an equivalent damping constant Heq was determined.

In the formula, ΔW (indicated by hatched lines in FIG. 3) is an amount of energy absorbed, represented by the total surface area of the hysteresis loop H.

W (indicated by cross-hatched lines in FIG. 3) is an elastic distortion energy represented by the surface area of a triangular region surrounded by the line L1, an axis of abscissa of the graph, and a perpendicular line L2 drawn to the axis of abscissa from an intersection point between the line L1 and the hysteresis loop H.

When the equivalent damping constant Heq in Comparative Example 1 was taken as 100, relative values of the equivalent damping constants Heq in Examples were calculated.

[Table 1]

[TABLE 1]

| No. | | | | Comp. Ex. 1 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|---|
| Mixing formulation (mass %) | Rosins (A) | | Tall rosin | 66% | 83% | 77% | 72% | 77% | 56% | 53% | 59% | 51% |
| | Oxyalkylene compound (B) | Hydroxyl group-containing oxyalkylene (b1-1) | DEG | - | 17% | - | - | - | - | - | 6% | - |
| | | | TEG | - | - | 23% | - | - | - | - | 9% | 8% |
| | | | Polyoxyethylene glycol 1 (Mn 200, No. of EO 4) | - | - | - | 28% | - | - | - | - | 10% |
| | | | Polyoxyethylene glycol 2 (Mn 400, No. of EO 9) | - | - | - | - | - | 44% | - | - | - |
| | | | Polyoxyethylene ether tetraol (No. of EO 4) | - | - | - | - | 23% | - | - | - | - |
| | | (Meth)acryl group-containing oxyalkylene (b1-2) | Methoxy-polyoxyethylene glycol acrylate 1 (No. of EO 9) | - | - | - | - | - | - | 24% | - | - |
| | | | Methoxy-polyoxyethylene glycol acrylate 2 (No. of EO 13) | - | - | - | - | - | - | - | 26% | 31% |
| | Alcohol (C) | | 1-Octanol | 34% | - | - | - | - | - | 23% | - | - |
| Number of oxyalkylene units/1 molecule | | | | 0 | 2 | 3 | 4 | 4 | 9 | 9 | 28, 29 | 29, 30 |
| Number of cyclic diterpene structures/1 molecule | | | | 1 | 2 | 2 | 2 | 4 | 2 | 1 | 2 | 2 |
| Evaluation | | | Damping (100% distortion) | 100% | 108% | 119% | 125% | 122% | 126% | 110% | 129% | 124% |

The details of the abbreviations in Table 1 are given in the following.
Tall rosin: trade name HARTALL R-WW, manufactured by Harima Chemicals, Inc.
DEG: diethylene glycol, manufactured by Tokyo Chemical Industry Co., Ltd.
TEG: triethylene glycol, manufactured by Tokyo Chemical Industry Co., Ltd.
Polyoxyethylene glycol 1: average number of hydroxyl groups: 2, number of oxyethylene (EO) units: 4, manufactured by Tokyo Chemical Industry Co., Ltd.
Polyoxyethylene glycol 2: average number of hydroxyl groups: 2, number of oxyethylene (EO) units: 9, manufactured by Tokyo Chemical Industry Co., Ltd.
Polyoxyethylene tetraol: trade name PNT-40, average number of hydroxyl groups: 4, number of oxyethylene (EO) units: 4, manufactured by Nippon Nyukazai Co., Ltd.
Methoxy-polyoxyethylene glycol acrylate 1: trade name AM-90G, average number of (meth)acryl groups: 1, number of oxyethylene (EO) units: 9, manufactured by Shin-Nakamura Chemical Co., Ltd.
Methoxy-polyoxyethylene glycol acrylate 2: trade name AM-130G, average number of (meth)acryl groups: 1, number of oxyethylene (EO) units: 13, manufactured by Shin-Nakamura Chemical Co., Ltd.
Cyclic diterpene structure: cyclic diterpene structure derived from rosins (A)
While the illustrative embodiments of the present invention are provided in the above-described invention, such is for illustrative purpose only and it is not to be construed restrictively. Modification and variation of the present invention that will be obvious to those skilled in the art is to be covered by the following claims.

Industrial Applicability

The additive for a damping polymer according to the present invention is suitably used in fields of vibration control members for cables, vibration-proof members, and vibration-proof members in electronic equipment.

## Claims

1. An additive for a damping polymer comprising a reaction product of

    rosins (A); and
    an oxyalkylene compound (B) capable of reacting with the rosins (A),
    wherein the number of oxyalkylene units per molecule of the reaction product is 2 or more.

2. The additive for a damping polymer according to claim 1, wherein
the number of cyclic diterpene structures derived from the rosins (A), per molecule of the reaction product, is 2 or more and 6 or less.

FIG.1

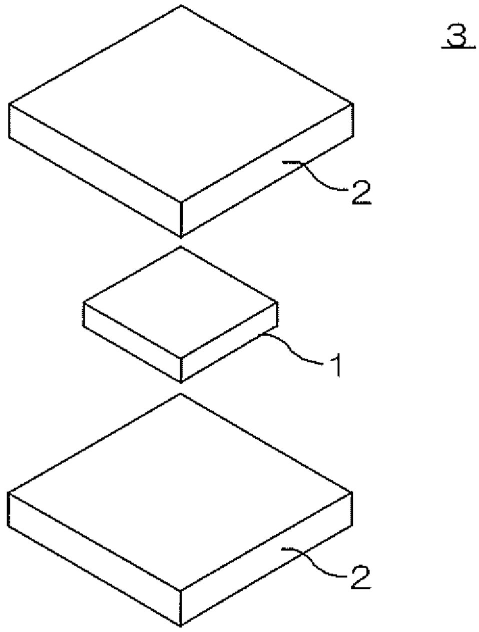

FIG. 2

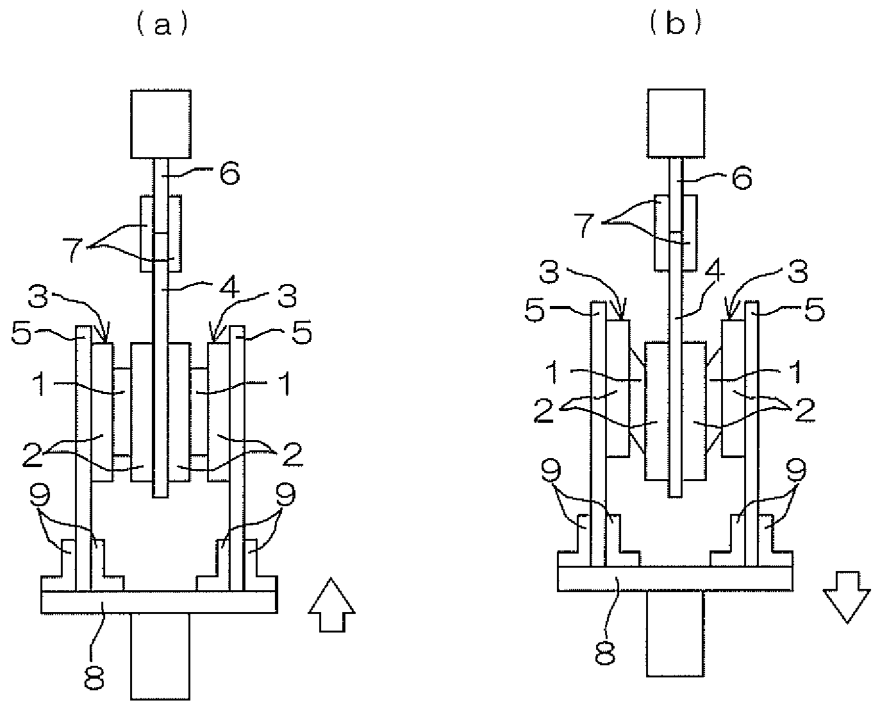

FIG. 3

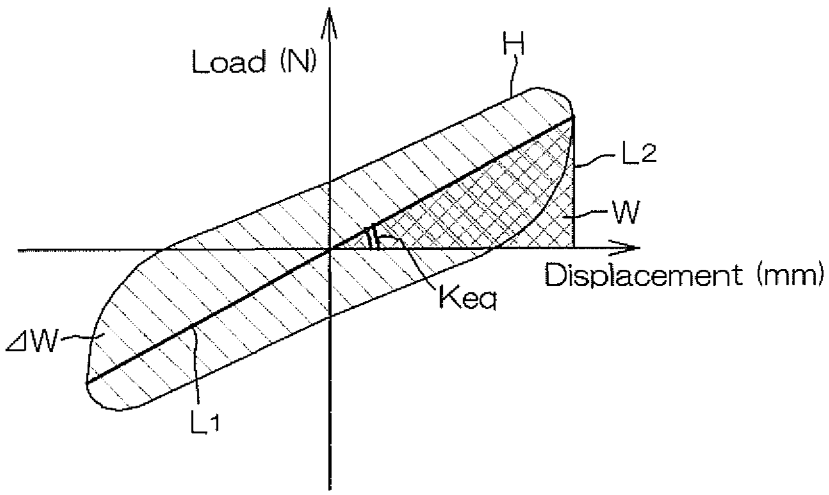

**INTERNATIONAL SEARCH REPORT**

International application No. PCT/JP2021/011370

A. CLASSIFICATION OF SUBJECT MATTER
Int.Cl. C08L101/00(2006.01)i, C08L93/04(2006.01)i, F16F15/02(2006.01)i, F16F15/08(2006.01)i
FI: C08L101/00, C08L93/04, F16F15/02Q, F16F15/08D
According to International Patent Classification (IPC) or to both national classification and IPC

B. FIELDS SEARCHED
Minimum documentation searched (classification system followed by classification symbols)
Int.Cl. C08L101/00-101/14, C08K3/00-13/08, F16F15/02, F16F15/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-060179 A (TOKAI RUBBER IND LTD.) 03 March 1998 (1998-03-03), claims 1, 4, paragraphs [0009], [0010], [0027]-[0030], [0038], tables 1, 3, example 2 | 1-2 |
| X | JP 2019-094513 A (TOYO INK SC HOLDINGS CO., LTD.) 20 June 2019 (2019-06-20), claim 1, paragraphs [0053], [0059], [0077], [0084], [0086], table 2, example 1 | 1-2 |
| A | JP 2009-138053 A (SUMITOMO RUBBER INDUSTRIES, LTD.) 25 June 2009 (2009-06-25), entire text | 1-2 |
| A | JP 2015-007468 A (OILES CORPORATION) 15 January 2015 (2015-01-15), entire text | 1-2 |
| A | JP 2014-004983 A (TOKAI RUBBER IND LTD.) 16 January 2014 (2014-01-16), entire text | 1-2 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May 2021 | 01 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2021/011370

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-021185 A (ARIZONA CHEMICAL CO LLC) 08 February 2018 (2018-02-08), entire text | 1-2 |
| A | JP 2010-070743 A (TOYO INK MFG CO., LTD.) 02 April 2010 (2010-04-02), entire text | 1-2 |

Form PCT/ISA/210 (second sheet) (January 2015)

**INTERNATIONAL SEARCH REPORT**
Information on patent family members

International application No.
PCT/JP2021/011370

| | | |
|---|---|---|
| JP 10-060179 A | 03 March 1998 | (Family: none) |
| JP 2019-094513 A | 20 June 2019 | (Family: none) |
| JP 2009-138053 A | 25 June 2009 | (Family: none) |
| JP 2015-007468 A | 15 January 2015 | US 2016/0122498 A1<br>entire text<br>WO 2014/192289 A1<br>EP 3006772 A1<br>TW 201506277 A<br>CN 105308354 A<br>KR 10-2016-0003786 A |
| JP 2014-004983 A | 16 January 2014 | (Family: none) |
| JP 2018-021185 A | 08 February 2018 | JP 2015-505893 A<br>US 2014/0338565 A1<br>entire text<br>JP 2015-514859 A<br>JP 2015-515536 A<br>JP 2018-28095 A<br>JP 2018-35352 A<br>US 2015/0240081 A1<br>WO 2013/090283 A1<br>WO 2013/163463 A1<br>WO 2013/163467 A1<br>EP 2791247 A1<br>EP 2791248 A1<br>CN 104245850 A<br>CN 104364318 A<br>KR 10-2015-0005902 A<br>KR 10-2015-0005903 A |
| JP 2010-070743 A | 02 April 2010 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003003014 A